# EUROPEAN PATENT SPECIFICATION

(11) **EP 3 787 271 B1**
(45) Date of publication and mention of the grant of the patent: **08.11.2023**
(21) Application number: 19194401.6
(22) Date of filing: 29.08.2019
(51) Int. Cl.: H04M 3/42, H04L 67/54, H04M 3/533

(54) **METHOD FOR ESTABLISHING OR FOR FACILITATING TO ESTABLISH A VOICE COMMUNICATION SESSION BETWEEN A FIRST USER EQUIPMENT AND A SECOND USER EQUIPMENT, SYSTEM, AND TELECOMMUNICATIONS NETWORK, PROGRAM AND COMPUTER-READABLE MEDIUM**
VERFAHREN ZUM EINRICHTEN ODER ZUM ERLEICHTERN DES AUFBAUS EINER SPRACHKOMMUNIKATIONSSITZUNG ZWISCHEN EINEM ERSTEN BENUTZERGERÄT UND EINEM ZWEITEN BENUTZERGERÄT, SYSTEM UND TELEKOMMUNIKATIONSNETZ, PROGRAMM UND COMPUTERLESBAREM MEDIUM
PROCEDE POUR ETABLIR OU FACILITER L'ETABLISSEMENT D'UNE SESSION DE COMMUNICATION VOCALE ENTRE UN PREMIER EQUIPEMENT UTILISATEUR ET UN DEUXIEME EQUIPEMENT UTILISATEUR, SYSTEME, ET RESEAU, PROGRAMME ET SUPPORT LISIBLE PAR ORDINATEUR DE TELECOMMUNICATIONS

(43) Date of publication of application: 03.03.2021
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- EP-A2- 2 347 565
- US-A1- 2017 187 882

## Description

### BACKGROUND

The present invention relates to a method for establishing or for facilitating to establish a voice communication session between a first user equipment and a second user equipment using a telecommunications network.

Furthermore, the present invention relates to a system for establishing or for facilitating to establish a voice communication session between a first user equipment and a second user equipment using a telecommunications network.

Additionally, the present invention relates to a telecommunications network for establishing or for facilitating to establish a voice communication session between a first user equipment and a second user equipment using a telecommunications network.

Furthermore, the present invention relates to a program comprising a computer readable program code, and to a computer-readable medium comprising instructions which when executed help to perform an inventive method.

Today, mobile communication networks or mobile radio systems, and fixed line telecommunications networks are typically equipped with an integrated answering machine function as a standard. This function is typically implemented on the software side in the components of the systems (especially the core network systems) and does typically not require external (typically local) answering machines as in earlier (analogue or ISDN) landline telephone networks.

Such network-based answering machines are typically configurable by the customer in many ways to perform various functions or to become active when a previously defined constellation occurs.

Typically, such answering machines are configured to redirect an incoming call (i.e. a call directed to a called party's fixed or mobile device) to the called party's answering machine functionality in certain circumstances, such as, typically, situations where the incoming call is not answered (inaccessibility of the called party) after a certain time (typically a certain number of ringing tones), or in case that the called party (or called telephone number) is busy due to another ongoing call, or - especially when mobile devices connected to mobile communication networks are concerned - the inaccessibility of the called party caused by the mobile device being either switched off or being outside of sufficient radio coverage of the mobile communication network.

In addition, functions for transmitting the number of the called party ("CLIP - Calling Line Identification Presentation") are state of the art today. A missed call is typically presented on a mobile phone (user equipment or mobile device) or on a fixed line telephone device together with the corresponding telephone number of the caller.

Especially when using mobile devices connected to a mobile communication network, the following situation occurs repeatedly: The called party is not able to answer the call sufficiently quickly, hence the call is forwarded or redirected to the answering machine functionality within the telecommunications network/mobile communication network. The calling party records a message on the answering machine functionality during a certain time interval, and just during this time interval, the (initially) called party tries to call the other party (i.e. the initially calling party). Due to the fact that this initially calling party is still recording the message on the answering machine functionality, it cannot answer this call (initiated by the initially called party), and, oftentimes, this call might likewise be redirected or forwarded to the answering machine functionality of the initially calling (now called) party. One approach dealing with a voicemail system which informs a called party on the status of voice message recording is disclosed in US2017187882.

### SUMMARY

An object of the present invention is to provide a method, a system, and a telecommunications network for establishing or for facilitating to establish a voice communication session between a first user equipment and a second user equipment, especially in situations as mentioned above, i.e. where two telephone parties are transmitting the information to the corresponding telecommunications network (or telecommunications networks) that a voice communication session be established between them. Additionally, objects of the present invention relate to a program comprising a computer readable program code, and to a computer-readable medium comprising instructions which when executed help to perform an inventive method.

The object of the present invention is achieved by a method according to claim 1.

According to the present invention, it is advantageously possible to establish or to facilitate to establish a voice communication session between a first user equipment and a second user equipment trying to be connected. Thereby, it is advantageously possible to avoid possibly multiple attempts to establish a voice communication session.

One example of such a situation is described above: In case of the first user equipment trying to reach a second user equipment, and the called party (i.e. the second user equipment) is not able to answer the call sufficiently quickly (or not at all), the call is typically forwarded or redirected to the answering machine functionality (within the telecommunications network/mobile communication network) of or associated with the second user equipment. In case the second user equipment (i.e. the initially called party) also tries to establish a voice communication session while a message is recorded on its answering machine functionality (by the first user equipment), also this attempt to call or to establish a voice communication session in some kind fails as it is typically redirected or forwarded to the corresponding answering machine functionality, this time of the first user equipment.

According to another example of such a situation where the establishment of a voice communication session might fail or might at least be rendered more cumbersome, a (mobile terminated) call (initiated by a first user equipment) to a mobile device or second user equipment (connected to a mobile communication network via an access network of the mobile communication network) might fail due to the second user equipment temporarily not having sufficient radio coverage. If in such a situation, and once there is again sufficient radio coverage at the location of the second user equipment (e.g. by means of the second user equipment having moved in the meantime), the second user equipment tries to call the first user equipment while the first user equipment, e.g., either still tries to reach or again tries to reach the first user equipment, a voice communication session will not be established (as the first user equipment is occupied, and, again, this voice call attempt (of the second user equipment) is typically redirected or forwarded to the corresponding answering machine functionality of the first user equipment).

According to the present invention, it is advantageously possible that in such situations as described, a voice communication session between the first user equipment and the second user equipment is able to be realized (or established) - or is at least potentially able to be realized or to be established - in a more hassle-free manner, quicker and requiring less energy (typically for both the one or plurality of mobile devices or user equipments involved, as well as for the telecommunications network).

According to the present invention, it is assumed that at least one attempt, by the first user equipment, to establish the voice communication session with the second user equipment is unsuccessful, i.e. the (user of the) first user equipment tried to reach the (user of the) second user equipment, and this attempt failed. The present invention is about proposing a manner in order to avoid unnecessary subsequent attempts (one or a plurality of such attempts) to establish a voice communication session between the first and second user equipment - typically performed by the second user equipment - that are more or less sure to fail due to the first user equipment being occupied (especially due to the fact that the first user equipment is used to record a message to the answering machine of the second user equipment) or due to the first user equipment not being available to take a call for other reasons.

At least in case that both the first and the second user equipment are both connected to either the same telecommunications network (or mobile communication network) or, at least, to different telecommunications networks (such as a mobile communication network and a fixed line telecommunications network) operated by the same operator, it is possible for the telecommunications network (or for an instance or network node or entity within the telecommunications network) to know about the respective states of the first and second user equipments involved. Hence, it is advantageously possible according to the present invention to at least inform the called party (i.e. the second user equipment) that the first party is currently unavailable or occupied (and, hence, a callback or an attempt to initiate a voice communication session is currently unlikely to result in a successful session), e.g., due to it recording (or potentially recording) a message on the answering machine associated with the second user equipment. However, even in case that the first and the second user equipment are connected to different telecommunications networks (or mobile communication networks) being operated by different operators, it is possible for the telecommunications network (or for an instance or network node or entity within the telecommunications network) of the second user equipment to know, at least partly, about the first user equipment being occupied (due to the first user equipment either recording a message to the answering machine system of the second user equipment (i.e. within the telecommunications network of the second user equipment), or due to the first user equipment trying to reach (i.e. dialing and/or waiting, after dialing, for a call to be established) the second user equipment). Hence, also in case of different telecommunications networks used (operated by different operators), it is advantageously possible according to the present invention to at least inform the called party (i.e. the second user equipment) that the first party is currently unavailable or occupied.

This information - i.e. the indication related to the current communication status of the first user equipment, or the indication related to the current communication status of a voice message recording system related to the second user equipment - could, e.g., be a text-oriented or symbolic information displayed on the display means of the second user equipment, or communicated otherwise by the second user equipment to its user, e.g., by means of another optical indication (other than an information displayed on a display means of the second user equipment, e.g. by means of an LED indicator), or by means of a vibrating alert or the like.
This information might especially express that the calling party (i.e. the first user equipment) is currently unavailable that that an immediate call-back is pointless (as such a premature call (back), initiated by the second user equipment, would rather result in reaching the voice message recording system related to the first user equipment than the (user of the) first user equipment).
Especially according to the present invention, this information (i.e. the indication related to the current communication status of the first user equipment, or the indication related to the current communication status of a voice message recording system related to the second user equipment) is a complement to the CLIP indication (or CLIP message, Calling line identification presentation), e.g. such that, in case that the call (initiated by the first user equipment and directed to the second user equipment) cannot be established with the second user equipment (due to, e.g., unreachability of the (user of the) second user equipment or due to the second user equipment being out of coverage) but rather with the voice message recording system related to the second user equipment, a corresponding indication or message is transmitted to the second user equipment, namely that currently an incoming call is re-directed to the voice message recording system (related to the second user equipment).

For the specific case of the initially calling party (i.e. the first user equipment) currently using the answering machine of the second user equipment, it is advantageously possible according to the present invention that a respective message or indication is transmitted to the second user equipment (or that the second user equipment generates such an indication, especially in order to display or otherwise signal such an indication to a user of the second user equipment). For example, the second user equipment might receive an indication related to the current communication status of the first user equipment, e.g. that the first user equipment is currently recording a message to the answering machine (or voice message recording system) associated with the second user equipment. Alternatively, the second user equipment might generate (or also receive) an indication related to the current communication status of the answering machine (or voice message recording system) related to the second user equipment.

According to the present invention, in a second step (typically, but not necessarily, being or occurring subsequent to the first step), the second user equipment transmits at least one signaling message or control message intended to establish the voice communication session with the first user equipment or intended to initiate a further voice communication session with the first user equipment.
For the transmission, by the second user equipment, of the at least one signaling message or control message (intended to establish the voice communication session with the first user equipment or intended to initiate a further voice communication session with the first user equipment) predefined timing requirements apply, especially with respect to the first (unsuccessful) attempt to establish the voice communication session (by the first user equipment): Especially, the transmission, by the second user equipment, of the at least one signaling message or control message will be avoided during a time interval following the first (unsuccessful) attempt to establish the voice communication session (by the first user equipment), due to either it being certain that the first user equipment is currently using the voice message recording system associated with the second user equipment, or it being likely (due to typical lengths of mailbox messages or due to a maximum length of mailbox messages) that the first user equipment is currently using the voice message recording system associated with the second user equipment.

According to the present invention, in the second step, the second user equipment transmits at least one signaling message or control message intended to establish the voice communication session with the first user equipment or intended to initiate a further voice communication session with the first user equipment. Of course, this is typically done, by the second user equipment, taking into consideration the indication related to the current communication status of the first user equipment or the indication related to the current communication status of the voice message recording system related to the second user equipment, i.e. the at least one signaling message or control message (intended to establish the voice communication session (or the further voice communication session) with the first user equipment) is only transmitted by the second user equipment after the first user equipment is either known to be no longer occupied, or, at least, after the status of the first user equipment indicates that the first user equipment is no longer recording a message to the voice message recording system related to the second user equipment. As a consequence of the second user equipment transmitting the at least one signaling message or control message, it is preferred, according to the present invention, that the voice communication session or the further voice communication session between the first and second user equipment is established in a subsequent third step of the inventive method.

According to a second alternative variant of the present invention, the second user equipment also transmits, in the second step, the at least one signaling message or control message (intended to establish the voice communication session with the first user equipment or intended to initiate a further voice communication session with the first user equipment). According to the first variant of the present invention, this is done by preferably taking into consideration the indication related to the current communication status of the first user equipment or the indication related to the current communication status of the voice message recording system related to the second user equipment. However, according to the second variant of the present invention, the second user equipment transmits, in the second step of the inventive method (and after at least one unsuccessful attempt, by the first user equipment, to establish the voice communication session with the second user equipment), the at least one signaling message or control message but without necessarily receiving an indication related to the current communication status of the first user equipment or an indication related to the current communication status of the voice message recording system related to the second user equipment. According to the second alternative variant of the present invention, as a consequence of the second user equipment transmitting the at least one signaling message or control message, the voice communication session or the further voice communication session between the first and second user equipment is established anyway in the third step, and, subsequently, in the first step, an indication of the communication between the first and second user equipment is received or generated by the second user equipment.
This establishment of the voice communication session (or the further voice communication session) is possible, both in case that both the first and the second user equipment are connected to the same telecommunications network (or mobile communication network), or to different telecommunications networks (such as a mobile communication network and a fixed line telecommunications network) operated by the same operator, as well as in case the first and the second user equipment are connected to different telecommunications networks (or mobile communication networks) being operated by different operators - as the following pieces of information are available to the telecommunications network or telecommunications networks:
-- the first (unsuccessful) attempt to establish the voice communication session (by the first user equipment),
-- followed by the second user equipment transmitting the at least one signaling message or control message, as well as
-- these events having a comparatively close timely relationship, i.e. occurring within a time interval being comparably small, e.g. ranging from between a fraction of a second (such as 200 ms, or 400 ms, or 600 ms or 800 ms) to a comparably low number of seconds (such as 1 s or 2 s or 3 s or 4 s or 5 s or 8 s or 10 s or 15 s or 20 s or 30 s).
Hence, it is possible for the telecommunications network(s) (or for an instance or network node or entity within the telecommunications network(s)) to know about the respective states of the first and second user equipments involved.

According to the present invention, a voice communication session shall be established (or facilitated to be established) between the first and second user equipment after at least one unsuccessful attempt (of establishing such a voice communication session) by the first user equipment, and after the second user equipment transmits at least one signaling message or control message. The ensuing, eventually established, voice communication session might be interpreted as being either a continuation of the voice communication session initially attempted (initially unsuccessfully) to be established by the first user equipment, or it might be interpreted as a new (or further) voice communication session initiated by the second user equipment (by means of the at least one signaling message or control message).

Hence, both according to the first variant of the present invention and according to the second variant of the present invention, the establishment of a voice communication session between the first user equipment and the second user equipment is at least facilitated.

It is furthermore preferred according to the present invention that, in a subsequent third step of the inventive method, the voice communication session or the further voice communication session between the first and second user equipment is established, wherein especially the voice communication session is charged to the first user equipment and the further voice communication session is charged to the second user equipment.

It is thereby advantageously possible to eventually establish the attempted voice communication session between the first and second user equipment. As the initial attempt to establish the voice communication session is initiated by the first user equipment, one solution is to charge the voice communication session to the first user equipment; however it might also be charged to the second user equipment. Otherwise, it is preferred to charge the further voice communication session to the second user equipment; however, it might also be charged to the first user equipment. It is thereby advantageously possible according to the present invention to flexibly charge the established voice communication session between the first and second user equipments.

According to a further embodiment of the present invention, the indication related to the current communication status of the first user equipment is related to the first user equipment recording a message to the voice message recording system related to the second user equipment.

Thereby, it is advantageously possible to indicate to the second user equipment that the first user equipment is currently not available.

According to the present invention, it is furthermore preferred that the at least one attempt, by the first user equipment, to establish the voice communication session with the second user equipment is unsuccessful, due to the second user equipment being
-- engaged in another voice communication session with a further user equipment, or
-- engaged in trying to establish a voice communication session, especially with the first user equipment, or
-- temporarily unreachable.

Thereby, it is advantageously possible to address all mayor possible scenarios of the attempted voice communication session being unable to be established by the first user equipment.

According to a further preferred embodiment of the present invention, the telecommunications network is a mobile communication network having or comprising or being able to use an access network, and the second user equipment is a mobile device connected to the mobile communication network via the access network, and wherein the at least one attempt, by the first user equipment, to establish the voice communication session with the second user equipment is unsuccessful, due to the second user equipment being unreachable to the access network, especially due to a paging message (or a plurality of paging messages) being unable to be timely responded to by the second user equipment.

Thereby, it is advantageously possible to apply the present invention not only to scenarios where the (user of the) second user equipment does not take the incoming call from the first user equipment during a sufficiently small period of time, but also in cases or scenarios where the second user equipment is unreachable, i.e. where the incoming call from the first user equipment is not able to be signaled (at the time of calling or within a reasonable time interval) at the second user equipment (especially due to insufficient radio coverage).

According to still a further preferred embodiment of the present invention, prior to the at least one attempt, by the first user equipment, to establish the voice communication session with the second user equipment, a prior voice communication session is (or was or has been) established between the first user equipment and the second user equipment, and wherein the prior voice communication session is interrupted, especially due to the first user equipment and/or the second user equipment experiencing a reduction of radio coverage - especially by moving, while the prior voice communication session is still ongoing, from a location having a certain radio coverage sufficient for maintaining the prior voice communication session towards a location having a coverage insufficient for maintaining the prior voice communication session.

Thereby, it is advantageously possible according to the present invention, in some way to continue - by means of establishing the voice communication session or the further voice communication session - the prior voice communication session. Especially, charging of the voice communication session or the further voice communication session might be conducted depending on whether the prior voice communication session has been initiated by the first user equipment or by the second user equipment.

The present invention also relates to a system according to claim 6.

By means of such a system, it is advantageously possible to establish or to facilitate to establish a voice communication session between a first user equipment and a second user equipment trying to be connected. Thereby, it is advantageously possible to avoid possibly multiple attempts to establish a voice communication session. Hence, both according to the first variant of the present invention and according to the second variant of the present invention, the establishment of a voice communication session between the first user equipment and the second user equipment is at least facilitated.

Furthermore, the present invention relates to a program comprising a computer readable program code which, when executed on a computer or on a network node of a telecommunications network or on a user equipment, or in part on a network node of a telecommunications network and/or in part on a user equipment, causes the computer or the network node of the telecommunications network or the user equipment to perform a method according to the present invention.

Additionally, the present invention relates to a computer-readable medium comprising instructions which when executed on a computer or on a network node of a telecommunications network or on a user equipment, or in part on a network node of a telecommunications network and/or in part on a user equipment, causes the computer or the network node of the telecommunications network or the user equipment to perform a method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention as defined by the appended claims. The reference figures quoted below refer to the attached drawings.

### BRIEF DESCRIPTION OF THE DRAWINGS

Figure 1 schematically illustrates a call scenario of a first user equipment calling a second user equipment where the call is re-directed towards an answering machine (or a voice message recording system) related to the second user equipment.
Figure 2 schematically illustrates a user equipment connected to a telecommunications network as a mobile communication network, having an access network part and a core network part.
Figure 3 schematically illustrates a call scenario according to the present invention where a first user equipment is calling a second user equipment, and where the second user equipment receives an indication related to the current communication status of a voice message recording system related to the second user equipment.
Figure 4 schematically illustrates a call scenario according to the present invention where a first user equipment is calling a second user equipment, and where the second user equipment transmits a signaling message or control message intended to establish a voice communication session with the first user equipment.
Figure 5 schematically illustrates a timing diagram representing a prior voice communication session and a voice communication session or further voice communication session.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

According to the present invention, an improved method for establishing or for facilitating to establish a voice communication session between a first user equipment 21 and a second user equipment 22 is disclosed.

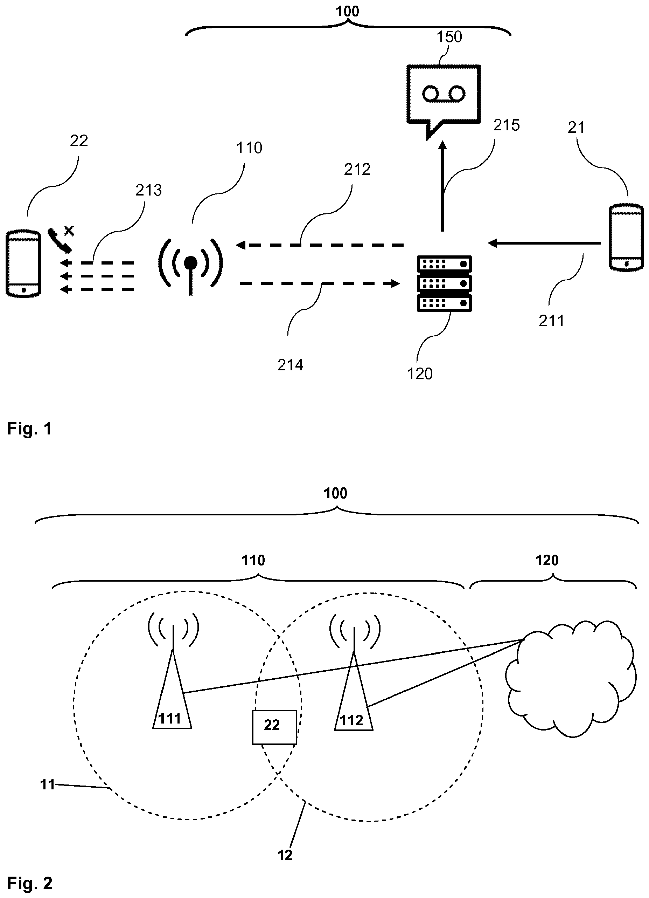

In Figure 1, a call scenario of the first user equipment 21 calling the second user equipment 22 is schematically shown, especially for the case of the call being a mobile terminated call with the second user equipment 22 being in contact with (an access network 110 of) a mobile communication network 100 as the telecommunications network 100. The call of or initiated by the first user equipment 21 (or the corresponding call initiation signaling) is represented, in Figure 1, by means of an arrow emanating from the first user equipment 21, and an assigned reference sign 211. This call is forwarded to the access network 110 of the mobile communication network 100 (by a core network 120 of the mobile communication network 100), which is represented, in Figure 1, by means of an arrow directing to the access network 110, and an assigned reference sign 212. Furthermore, the call (or its corresponding signaling, especially by means of one or a plurality of paging messages) is forwarded to the second user equipment 22, which is represented, in Figure 1, by means of a plurality of arrows directing to the second user equipment 22, and an assigned reference sign 213. As the call is not answered, the call is re-directed towards an answering machine 150 (or a voice message recording system) 150 related to the second user equipment 22, which is represented, in Figure 1, by means of an arrow 214, emanating from the access network 110 and being directed to the core network 120, and also by means of a further arrow 215 directed to the answering machine 150 (or the voice message recording system) 150.

Hence, the first and second user equipment 21, 22 are using a telecommunications network 100 (or at least one telecommunications network) in order to establish the voice communication session, where at least one attempt, by the first user equipment 21, to establish such a voice communication session (towards the second user equipment 22) is unsuccessful or fails. In typical configurations or situations, such an unsuccessful or failing attempt to establish a voice communication session typically triggers the call being re-directed towards a network node of the telecommunications network 100 (of the second user equipment in case that the first and second user equipments 21, 22 are using or are connected to different telecommunications networks), typically an answering machine 150 or a voice message recording system 150 related to the second user equipment 22.

In Figure 2, a user equipment 22 (or the second user equipment 22) is schematically shown which is connected to the telecommunications network 100, being shown exemplarily as a mobile communication network 100. The telecommunications network 100 (or mobile communication network 100) has or comprises the access network 110 or access network part 110 and the core network 120 or core network part 120. The access network 120 is shown as a cellular network, i.e. comprising a plurality of radio cells or radio coverage areas, two of which are schematically shown, in Figure 2, as first radio cell 11, and second radio cell 12. As typically is the case, each radio cell 11, 12 is served by an assigned base station entity, i.e. the first radio cell 11 is served by a first base station entity 111, and the second radio cell 12 is served by a second base station entity 112.

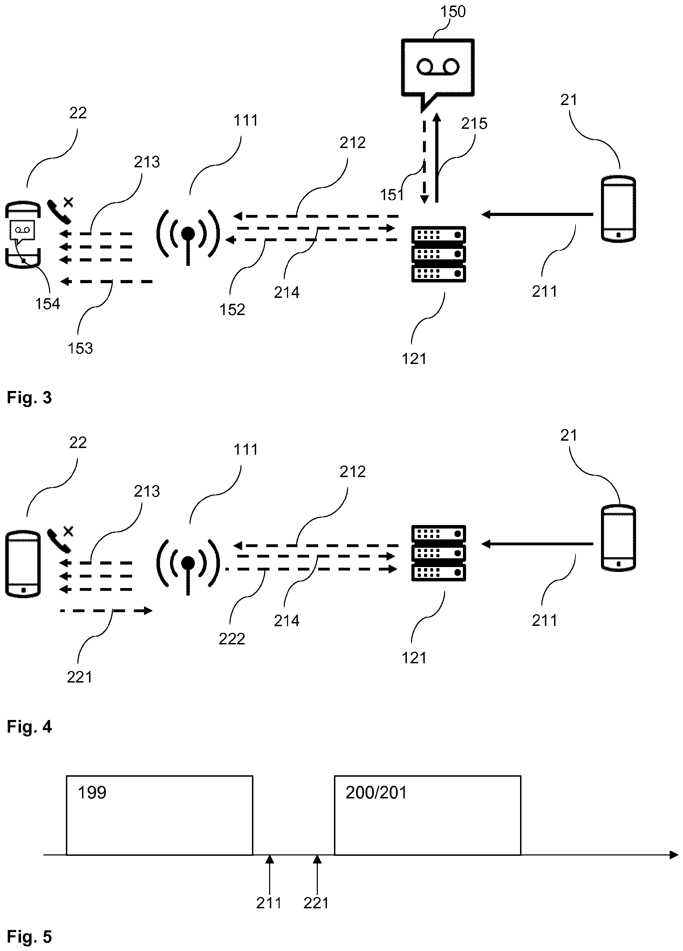

In Figure 3, a call scenario according to the present invention is schematically shown, where the first user equipment 21 is calling the second user equipment 22 (especially for the case of the call being a mobile terminated call with the second user equipment 22 being in contact with the access network 110 of the mobile communication network 100), and the second user equipment 22 receiving an indication related to the current communication status of a voice message recording system 150 related to the second user equipment 22.

Again, the attempted (but failed) call of or initiated by the first user equipment 21 (or the corresponding call initiation signaling) is represented, also in Figure 3, by means of arrows 211, 212, and 213 (i.e. arrow 211, emanating from the first user equipment 21, arrow 212, emanating from the core network 120 or from a network node 121 of the core network 120, and being directed to the access network 110 or a base station entity 111 of the access network 110, arrows 213, representing signaling, especially by means of one or a plurality of paging messages being forwarded to the second user equipment 22), and arrows 214 (emanating from the access network 110 and being directed to the core network 120), and 215 (directed to the answering machine 150 or voice message recording system 150), reflecting the fact that the attempted call has been unsuccessful, and, hence, the call is redirected to the voice message recording system 150 associated with the second user equipment 22.

According to at least one variant of the present invention, the fact that the attempted (but unsuccessful) call of the first user equipment 21 (to reach the second user equipment 22) is re-directed to the voice message recording system 150 (associated with the second user equipment 22) is transmitted to the second user equipment 22 by means of a signalization, exemplarily represented in Figure by means of arrows 151, 152, and 153:
-- arrow 151, emanating from the voice message recording system 150 to a network node 121 of the core network 120,
-- arrow 152, being directed to the access network 110, especially to one or a plurality of base station entities, one of which is schematically represented in Figure 3, namely the first base station entity 111, and
-- arrow 153, being directed to the second user equipment 22, and corresponding to the indication 153 related to the current communication status of the voice message recording system 150 related to the second user equipment 22.

According to a further variant of the present invention, the fact that the attempted (but unsuccessful) call of the first user equipment 21 is re-directed to the voice message recording system 150 (associated with the second user equipment 22) is signaled at the second user equipment 22 following (or as a result of) an indication generated by the second user equipment 22 (i.e. not necessarily received at the second user equipment 22), especially an indication related to the current communication status of the first user equipment 21 and/or an indication related to the current communication status of a voice message recording system related to the second user equipment 22.

In Figure 4, a call scenario according to the present invention is schematically shown, where the first user equipment 21 is calling the second user equipment 22 (especially for the case of the call being a mobile terminated call with the second user equipment 22 being in contact with the access network 110 of the mobile communication network 100), and where the second user equipment 22 transmits a signaling message or control message 221 intended to establish a voice communication session with the first user equipment 21.

Again, the attempted (but failed) call of or initiated by the first user equipment 21 (or the corresponding call initiation signaling) is represented, also in Figure 4, by means of arrows 211, 212, 213 and 214 (i.e. arrow 211, emanating from the first user equipment 21, arrow 212, emanating from the core network 120 or from a network node 121 of the core network 120, and being directed to the access network 110 or a base station entity 111 of the access network 110, arrows 213, representing signaling, especially by means of one or a plurality of paging messages being forwarded to the second user equipment 22, and arrow 214 (emanating from the access network 110 (or a base station entity 111 of the access network 110) and being directed to the core network 120 (or a network node 121 of the core network 120)), reflecting the fact that the attempted call has been unsuccessful.

According to all variants of the present invention, in a second step of the inventive method, the second user equipment 22 transmits at least one signaling message 221 or control message 221 intended to establish the voice communication session with the first user equipment 21 or intended to initiate a further voice communication session with the first user equipment 21. As a result of the at least one signaling message 221 or control message 221, a voice communication is able to be established with the first user equipment 21, either by manually waiting to transmit the at least one signaling message 221 or control message 221 (after the reception or generation of the indication related to the current communication status of the first user equipment 21 or the indication 153 related to the current communication status of the voice message recording system related to the second user equipment 22), such that the likelihood of the first user equipment 21 not being occupied is increased, or by automatically triggering the voice communication to be established, especially in case that the at least one signaling message 221 or control message 221 is transmitted while the first user equipment 21 is currently dialing to be connected to the second user equipment 22.

Figure 5 schematically illustrates a timing diagram (time being schematically represented by the arrow directing to the right) representing a prior voice communication session 199 and a voice communication session 200 or a further voice communication session 201: In such a situation, it is assumed that, prior to the at least one attempt 211, by the first user equipment 21, to establish the voice communication session 200 with the second user equipment 22, there has been a prior voice communication session 199 between the first and second user equipment 21, 22. It is furthermore assumed that this prior voice communication session 199 is interrupted, e.g. due to a reduction of radio coverage for one or both parties. If, in such a situation, the first user equipment 21 tries to (unsuccessfully) establish a voice communication, i.e. at least one attempt 211 to establish a voice communication session 200 with the second user equipment 22, the two user equipments 21, 22 might block each other repeatedly just by dialing to reach the other party while the other party also dials or has already been re-directed to the respective voice message recording system. In such a situation, i.e. after the at least one attempt 211 of the first user equipment 21, and after the at least one signaling message 221 or control message 221 from the second user equipment 22, the voice communication session (hence, the voice communication session 200 or the further voice communication session 201) might be established automatically by the respective telecommunications network(s).

## Claims

1. Method for establishing or for facilitating to establish a voice communication session between a first user equipment (21) and a second user equipment (22) using a telecommunications network (100), wherein at least one attempt (211), by the first user equipment (21), to establish the voice communication session (200) with the second user equipment (22) is unsuccessful, wherein the method comprises the following steps:
-- in a first step, the second user equipment (22) receives:
-- an indication related to the current communication status of the first user equipment (21), wherein the indication related to the current communication status of the first user equipment (21) is related to the first user equipment (21) recording a message to the voice message recording system related to the second user equipment (22), or
-- an indication (153) related to the current communication status of a voice message recording system related to the second user equipment (22),
wherein, in a second step, the second user equipment (22) transmits at least one signaling message (221) or control message (221) intended to establish the voice communication session (200) with the first user equipment (21) or intended to initiate a further voice communication session (201) with the first user equipment (21),
**characterized in that** the transmission, by the second user equipment, of the at least one signaling message (221) or control message (221) is avoided during a time interval following the first unsuccessful attempt (211) to establish the voice communication session by the first user equipment.

2. Method according to claim 1, wherein, in a subsequent third step, the voice communication session (200) or the further voice communication session (201) between the first and second user equipment (21, 22) is established, wherein especially the voice communication session (200) is charged to the first user equipment (21) and the further voice communication session (201) is charged to the second user equipment (22).

3. Method according to one of the preceding claims, wherein the at least one attempt (211), by the first user equipment (21), to establish the voice communication session (200) with the second user equipment (22) is unsuccessful, due to the second user equipment (22) being
-- engaged in another voice communication session with a further user equipment, or
-- engaged in trying to establish a voice communication session, especially with the first user equipment (21), or
-- temporarily unreachable.

4. Method according to one of the preceding claims, wherein the telecommunications network (100) is a mobile communication network (100) having or comprising or being able to use an access network (110), and the second user equipment (22) is a mobile device connected to the mobile communication network (100) via the access network (110), and wherein the at least one attempt (211), by the first user equipment (21), to establish the voice communication session (200) with the second user equipment (22) is unsuccessful, due to the second user equipment (22) being unreachable to the access network (110), especially due to a paging message (212) being unable to be timely responded to by the second user equipment (22).

5. Method according to one of the preceding claims, wherein prior to the at least one attempt (211), by the first user equipment (21), to establish the voice communication session (200) with the second user equipment (22), a prior voice communication session (199) is established between the first user equipment (21) and the second user equipment (22), and wherein the prior voice communication session (199) is interrupted, especially due to the first user equipment (21) and/or the second user equipment (22) experiencing a reduction of radio coverage - especially by moving, while the prior voice communication session (199) is still ongoing, from a location having a certain radio coverage sufficient for maintaining the prior voice communication session (199) towards a location having a coverage insufficient for maintaining the prior voice communication session (199).

6. System for establishing or for facilitating to establish a voice communication session between a first user equipment (21) and a second user equipment (22) using a telecommunications network (100), wherein at least one attempt (211), by the first user equipment (21), to establish the voice communication session (200) with the second user equipment (22) is unsuccessful, the system comprising the telecommunications network (100), the first user equipment (21), and the second user equipment (22), wherein the system is configured such that:
-- the second user equipment (22) receives
-- an indication related to the current communication status of the first user equipment (21), wherein the indication related to the current communication status of the first user equipment (21) is related to the first user equipment (21) recording a message to the voice message recording system related to the second user equipment (22), or
-- an indication (153) related to the current communication status of a voice message recording system related to the second user equipment (22),
-- the second user equipment (22) transmits at least one signaling message (221) or control message (221) intended to establish the voice communication session (200) with the first user equipment (21) or intended to initiate a further voice communication session (201) with the first user equipment (21),
**characterized in that** the transmission, by the second user equipment, of the at least one signaling message (221) or control message (221) is avoided during a time interval following the first unsuccessful attempt (211) to establish the voice communication session by the first user equipment.

7. Program comprising a computer readable program code which, when executed on a computer or on a network node of a telecommunications network (100) or on a user equipment (21, 22), or in part on a network node of a telecommunications network (100) and/or in part on a user equipment (21, 22), causes the computer or the network node of the telecommunications network (100) or the user equipment (21, 22) to perform a method according to one of claims 1 to 5.

8. Computer-readable medium comprising instructions which when executed on a computer or on a network node of a telecommunications network (100) or on a user equipment (21, 22), or in part on a network node of a telecommunications network (100) and/or in part on a user equipment (21, 22), causes the computer or the network node of the telecommunications network (100) or the user equipment (21, 22) to perform a method according to one of claims 1 to 5.

## Patentansprüche

1. Verfahren zum Aufbauen oder zum Ermöglichen des Aufbauens einer Sprachkommunikationssitzung zwischen einer ersten Benutzerausrüstung (21) und einer zweiten Benutzerausrüstung (22) unter Verwendung eines Telekommunikationsnetzes (100), wobei mindestens ein Versuch (211), durch die erste Benutzerausrüstung (21), die Sprachkommunikationssitzung (200) mit der zweiten Benutzerausrüstung (22) aufzubauen, erfolglos ist, wobei das Verfahren die folgenden Schritte umfasst:
-- in einem ersten Schritt empfängt die zweite Benutzerausrüstung (22):
-- einen Hinweis auf den momentanen Kommunikationsstatus der ersten Benutzerausrüstung (21), wobei sich der Hinweis auf den momentanen Kommunikationsstatus der ersten Benutzerausrüstung (21) darauf bezieht, dass die erste Benutzerausrüstung (21) eine Nachricht an das Sprachnachrichten-Aufzeichnungssystem aufzeichnet, das mit der zweiten Benutzerausrüstung (22) in Beziehung steht, oder
-- einen Hinweis (153) auf den momentanen Kommunikationsstatus eines Sprachnachrichten-Aufzeichnungssystems, das mit der zweiten Benutzerausrüstung (22) in Beziehung steht,
wobei, in einem zweiten Schritt, die zweite Benutzerausrüstung (22) mindestens eine Signalisierungsnachricht (221) oder Steuerungsnachricht (221) sendet, die dazu bestimmt ist, die Sprachkommunikationssitzung (200) mit der ersten Benutzerausrüstung (21) aufzubauen, oder die dazu bestimmt ist, eine weitere Sprachkommunikationssitzung (201) mit der ersten Benutzerausrüstung (21) zu initiieren,
**dadurch gekennzeichnet, dass** das Senden, durch die zweite Benutzerausrüstung, der mindestens einen Signalisierungsnachricht (221) oder Steuerungsnachricht (221) während eines Zeitintervalls, das auf den ersten erfolglosen Versuch (211) folgt, die Sprachkommunikationssitzung durch die erste Benutzerausrüstung aufzubauen, vermieden wird.

2. Verfahren nach Anspruch 1, wobei, in einem anschließenden dritten Schritt, die Sprachkommunikationssitzung (200) oder die weitere Sprachkommunikationssitzung (201) zwischen der ersten und der zweiten Benutzerausrüstung (21, 22) aufgebaut wird, wobei insbesondere die Sprachkommunikationssitzung (200) der ersten Benutzerausrüstung (21) in Rechnung gestellt wird und die weitere Sprachkommunikationssitzung (201) der zweiten Benutzerausrüstung (22) in Rechnung gestellt wird.

3. Verfahren nach einem der vorangehenden Ansprüche, wobei der mindestens eine Versuch (211), durch die erste Benutzerausrüstung (21), die Sprachkommunikationssitzung (200) mit der zweiten Benutzerausrüstung (22) aufzubauen, erfolglos ist, da die zweite Benutzerausrüstung (22)
-- an einer anderen Sprachkommunikationssitzung mit einer weiteren Benutzerausrüstung beteiligt ist oder
-- an einem Versuch beteiligt ist, eine Sprachkommunikationssitzung, insbesondere mit der ersten Benutzerausrüstung (21), aufzubauen, oder
-- vorübergehend nicht erreichbar ist.

4. Verfahren nach einem der vorangehenden Ansprüche, wobei das Telekommunikationsnetz (100) ein Mobilkommunikationsnetz (100) ist, das ein Zugangsnetz (110) aufweist oder umfasst oder verwenden kann, und die zweite Benutzerausrüstung (22) eine Mobilvorrichtung ist, die mit dem Mobilkommunikationsnetz (100) über das Zugangsnetz (110) verbunden ist, und wobei der mindestens eine Versuch (211), durch die erste Benutzerausrüstung (21), die Sprachkommunikationssitzung (200) mit der zweiten Benutzerausrüstung (22) aufzubauen, erfolglos ist, da die zweite Benutzerausrüstung (22) für das Zugangsnetz (110) nicht erreichbar ist, insbesondere, da eine Paging-Nachricht (212) durch die zweite Benutzerausrüstung (22) nicht rechtzeitig beantwortet werden kann.

5. Verfahren nach einem der vorangehenden Ansprüche, wobei vor dem mindestens einen Versuch (211), durch die erste Benutzerausrüstung (21), die Sprachkommunikationssitzung (200) mit der zweiten Benutzerausrüstung (22) aufzubauen, eine vorherige Sprachkommunikationssitzung (199) zwischen der ersten Benutzerausrüstung (21) und der zweiten Benutzerausrüstung (22) aufgebaut wird, und wobei die vorherige Sprachkommunikationssitzung (199) unterbrochen wird, insbesondere, da die erste Benutzerausrüstung (21) und/oder die zweite Benutzerausrüstung (22) eine Reduzierung der Funkversorgung erfahren - insbesondere durch Bewegen, während die vorherige Sprachkommunikationssitzung (199) immer noch stattfindet, von einem Ort, an dem eine bestimmten Funkversorgung herrscht, die für die Aufrechterhaltung der vorherigen Sprachkommunikationssitzung (199) ausreichend ist, zu einem Ort, dessen Funkversorgung nicht für die Aufrechterhaltung der vorherigen Sprachkommunikationssitzung (199) ausreichend ist.

6. System zum Aufbauen oder zum Ermöglichen des Aufbauens einer Sprachkommunikationssitzung zwischen einer ersten Benutzerausrüstung (21) und einer zweiten Benutzerausrüstung (22) unter Verwendung eines Telekommunikationsnetzes (100), wobei mindestens ein Versuch (211), durch die erste Benutzerausrüstung (21), die Sprachkommunikationssitzung (200) mit der zweiten Benutzerausrüstung (22) aufzubauen, erfolglos ist, wobei das System das Telekommunikationsnetz (100), die erste Benutzerausrüstung (21) und die zweite Benutzerausrüstung (22) umfasst, wobei das System so konfiguriert ist, dass:
-- die zweite Benutzerausrüstung (22) empfängt:
-- einen Hinweis auf den momentanen Kommunikationsstatus der ersten Benutzerausrüstung (21), wobei sich der Hinweis auf den momentanen Kommunikationsstatus der ersten Benutzerausrüstung (21) darauf bezieht, dass die erste Benutzerausrüstung (21) eine Nachricht an das Sprachnachrichten-Aufzeichnungssystem aufzeichnet, das mit der zweiten Benutzerausrüstung (22) in Beziehung steht, oder
-- einen Hinweis (153) auf den momentanen Kommunikationsstatus eines Sprachnachrichten-Aufzeichnungssystems, das mit der zweiten Benutzerausrüstung (22) in Beziehung steht,
-- die zweite Benutzerausrüstung (22) mindestens eine Signalisierungsnachricht (221) oder Steuerungsnachricht (221) sendet, die dazu bestimmt ist, die Sprachkommunikationssitzung (200) mit der ersten Benutzerausrüstung (21) aufzubauen, oder die dazu bestimmt ist, eine weitere Sprachkommunikationssitzung (201) mit der ersten Benutzerausrüstung (21) zu initiieren,
**dadurch gekennzeichnet, dass** das Senden, durch die zweite Benutzerausrüstung, der mindestens einen Signalisierungsnachricht (221) oder Steuerungsnachricht (221) während eines Zeitintervalls, das auf den ersten erfolglosen Versuch (211) folgt, die Sprachkommunikationssitzung durch die erste Benutzerausrüstung aufzubauen, vermieden wird.

7. Programm, umfassend einen computerlesbaren Programmcode, der, wenn er auf einem Computer oder in einem Netzknoten eines Telekommunikationsnetzes (100) oder in einer Benutzerausrüstung (21, 22) oder teilweise in einem Netzknoten eines Telekommunikationsnetzes (100) und/oder teilweise in einer Benutzerausrüstung (21, 22) ausgeführt wird, den Computer oder den Netzknoten des Telekommunikationsnetzes (100) oder die Benutzerausrüstung (21, 22) veranlasst, ein Verfahren nach einem der Ansprüche 1 bis 5 durchzuführen.

8. Computerlesbares Medium, umfassend Instruktionen, die, wenn sie auf einem Computer oder in einem Netzknoten eines Telekommunikationsnetzes (100) oder in einer Benutzerausrüstung (21, 22) oder teilweise in einem Netzknoten eines Telekommunikationsnetzes (100) und/oder teilweise in der Benutzerausrüstung (21, 22) ausgeführt werden, den Computer oder den Netzknoten des Telekommunikationsnetzes (100) oder die Benutzerausrüstung (21, 22) veranlassen, ein Verfahren nach einem der Ansprüche 1 bis 5 durchzuführen.

## Revendications

1. Procédé pour établir ou pour faciliter l'établissement d'une session de communication vocale entre un premier équipement utilisateur (21) et un deuxième équipement utilisateur (22) au moyen d'un réseau de télécommunications (100), dans lequel au moins une tentative (211), par le premier équipement utilisateur (21), d'établissement de la session de communication vocale (200) avec le deuxième équipement utilisateur (22) est sans succès, le procédé comprenant les étapes suivantes :
-- dans une première étape, le deuxième équipement utilisateur (22) reçoit :
-- une indication liée à l'état de communication actuel du premier équipement utilisateur (21), l'indication liée à l'état de communication actuel du premier équipement utilisateur (21) étant liée à l'enregistrement par le premier équipement utilisateur (21) d'un message sur le système d'enregistrement de message vocal lié au deuxième équipement utilisateur (22), ou
-- une indication (153) liée à l'état de communication actuel d'un système d'enregistrement de message vocal lié au deuxième équipement utilisateur (22),
dans lequel, dans une deuxième étape, le deuxième équipement utilisateur (22) transmet au moins un message de signalisation (221) ou message de contrôle (221) destiné à établir la session de communication vocale (200) avec le premier équipement utilisateur (21) ou destiné à démarrer une autre session de communication vocale (201) avec le premier équipement utilisateur (21),
**caractérisé en ce que** la transmission, par le deuxième équipement utilisateur, de l'au moins un message de signalisation (221) ou message de contrôle (221) est évitée pendant un intervalle de temps suivant la première tentative sans succès (211) d'établissement de la session de communication vocale par le premier équipement utilisateur.

2. Procédé selon la revendication 1, dans lequel, dans une troisième étape subséquente, la session de communication vocale (200) ou l'autre session de communication vocale (201) entre le premier et le deuxième équipement utilisateur (21, 22) est établie, dans lequel, en particulier, la session de communication vocale (200) est facturée au premier équipement utilisateur (21) et l'autre session de communication vocale (201) est facturée au deuxième équipement utilisateur (22).

3. Procédé selon l'une des revendications précédentes, dans lequel l'au moins une tentative (211), par le premier équipement utilisateur (21), d'établissement de la session de communication vocale (200) avec le deuxième équipement utilisateur (22) est sans succès en raison du fait que le deuxième équipement utilisateur (22) est
-- engagé dans une autre session de communication vocale avec un autre équipement utilisateur, ou
-- engagé dans un essai d'établissement d'une session de communication vocale, en particulier avec le premier équipement utilisateur (21), ou
-- temporairement injoignable.

4. Procédé selon l'une des revendications précédentes, dans lequel le réseau de télécommunications (100) est un réseau de communication mobile (100) présentant ou comprenant ou apte à utiliser un réseau d'accès (110), et le deuxième équipement utilisateur (22) est un dispositif mobile connecté au réseau de communication mobile (100) par le biais du réseau d'accès (110), et dans lequel l'au moins une tentative (211), par le premier équipement utilisateur (21), d'établissement de la session de communication vocale (200) avec le deuxième équipement utilisateur (22) est sans succès en raison du fait que le deuxième équipement utilisateur (22) est injoignable pour le réseau d'accès (110), en particulier en raison du fait qu'un message de paging (212) ne peut pas obtenir une réponse à temps par le deuxième équipement utilisateur (22).

5. Procédé selon l'une des revendications précédentes, dans lequel avant l'au moins une tentative (211), par le premier équipement utilisateur (21), d'établissement de la session de communication vocale (200) avec le deuxième équipement utilisateur (22), une session de communication vocale précédente (199) est établie entre le premier équipement utilisateur (21) et le deuxième équipement utilisateur (22), et dans lequel la session de communication vocale précédente (199) est interrompue, en particulier en raison du fait que le premier équipement utilisateur (21) et/ou le deuxième équipement utilisateur (22) subit une réduction de couverture radio - en particulier en se déplaçant, pendant que la session de communication vocale précédente (199) est toujours en cours, d'un endroit présentant une certaine couverture radio suffisante pour maintenir la session de communication vocale précédente (199) à un endroit présentant une couverture insuffisante pour maintenir la session de communication vocale précédente (199) .

6. Système pour établir ou pour faciliter l'établissement d'une session de communication vocale entre un premier équipement utilisateur (21) et un deuxième équipement utilisateur (22) au moyen d'un réseau de télécommunications (100), dans lequel au moins une tentative (211), par le premier équipement utilisateur (21), d'établissement de la session de communication vocale (200) avec le deuxième équipement utilisateur (22) est sans succès, le système comprenant le réseau de télécommunications (100), le premier équipement utilisateur (21) et le deuxième équipement utilisateur (22), le système étant configuré de telle manière que :
-- le deuxième équipement utilisateur (22) reçoit
-- une indication liée à l'état de communication actuel du premier équipement utilisateur (21), l'indication liée à l'état de communication actuel du premier équipement utilisateur (21) étant liée à l'enregistrement par le premier équipement utilisateur (21) d'un message sur le système d'enregistrement de message vocal lié au deuxième équipement utilisateur (22), ou
-- une indication (153) liée à l'état de communication actuel d'un système d'enregistrement de message vocal lié au deuxième équipement utilisateur (22),
-- le deuxième équipement utilisateur (22) transmet au moins un message de signalisation (221) ou message de contrôle (221) destiné à établir la session de communication vocale (200) avec le premier équipement utilisateur (21) ou destiné à démarrer une autre session de communication vocale (201) avec le premier équipement utilisateur (21),
**caractérisé en ce que** la transmission, par le deuxième équipement utilisateur, de l'au moins un message de signalisation (221) ou message de contrôle (221) est évitée pendant un intervalle de temps suivant la première tentative sans succès (211) d'établissement de la session de communication vocale par le premier équipement utilisateur.

7. Programme comprenant un code de programme lisible par ordinateur qui, quand il est exécuté sur un ordinateur ou sur un noeud de réseau d'un réseau de télécommunications (100) ou sur un équipement utilisateur (21, 22) ou en partie sur un noeud de réseau d'un réseau de télécommunications (100) et/ou en partie sur un équipement utilisateur (21, 22), amène l'ordinateur ou le noeud de réseau du réseau de télécommunications (100) ou l'équipement utilisateur (21, 22) à exécuter un procédé selon l'une des revendications 1 à 5.

8. Support lisible par ordinateur comprenant des instructions qui, quand elles sont exécutées sur un ordinateur ou sur un noeud de réseau d'un réseau de télécommunications (100) ou sur un équipement utilisateur (21, 22) ou en partie sur un noeud de réseau d'un réseau de télécommunications (100) et/ou en partie sur un équipement utilisateur (21, 22), amène l'ordinateur ou le noeud de réseau du réseau de télécommunications (100) ou l'équipement utilisateur (21, 22) à exécuter un procédé selon l'une des revendications 1 à 5.
